# EUROPÄISCHE PATENTSCHRIFT

(11) **EP 0 299 309 B1**
(45) Veröffentlichungstag und Bekanntmachung des Hinweises auf die Patenterteilung: **06.09.1995**
(21) Anmeldenummer: 88110603.3
(22) Anmeldetag: 02.07.1988
(51) Int. Cl.: D03D 15/00, D03D 11/00, B29C 70/08

(54) **Bauteil auf der Basis eines Mehrlagengewebes und Verfahren zu seiner Herstellung**
Construction element based on a multilayered fabric, and process for its manufacture
Elément de construction à base d'un tissu à couches multiples et procédé pour sa fabrication

(30) Priorität: 08.06.1988 DE 3819440; 17.07.1987 DE 3723680
(43) Veröffentlichungstag der Anmeldung: 18.01.1989
(73) Patentinhaber: Vorwerk & Co. Interholding GmbH, D-42216 Wuppertal (DE)
(72) Erfinder: Böttger, Wolfgang, D-8651 Ködnitz (DE); Biedermann, Kurt, D-8650 Kulmbach (DE)
(74) Vertreter: Müller, Enno, Dipl.-Ing.

(56) Entgegenhaltungen:
- AT-B- 383 623
- CH-A- 608 837
- FR-A- 2 434 880
- FR-A- 2 502 197
- GB-A- 1 561 976
- US-A- 3 895 160

## Beschreibung

Die Erfindung bezieht sich auf ein Bauteil auf der Basis eines Mehrlagengewebes, mit mindestens einer ersten und einer zweiten Lage, wobei die Gewebelangen durch Einbindefäden verbunden sind, weiter mit zwischen den Lagen sich erstreckenden eingelegten Füllfäden. Auch bezieht sich die Erfindung auf ein Verfahren zur Herstellung eines solchen Bauteils.

Ein in Form einer Doppelgewebebahn gestaltetes Mehrlagengewebe dieser Art ist durch das DE-GM 78 27 000 bekannt. Der Lagenzwischenraum wird entweder nachträglich mit einer ausschäumenden Schicht ausgefüllt oder das Mehrlagengewebe nimmt gleich beim Webprozeß ein System aus Füllfäden auf, die zugleich als Distanzmittel fungieren. Die Fesselung der Lagen aneinander geschieht über Bindefäden.

Aus der US-PS 3 895 160 ist ein Element bekannt, das aus zwei einzelnen, gesonderten textilen Lagen besteht. Diese beiden textilen Lagen sind nicht miteinander webtechnisch verbunden, sondern lediglich über zwischengelegte federnde Elemente, die aus starrem oder halbstarrem Kunststoff bestehen und auch faserartiges textiles Material beinhalten können. Über diese federnden Elemente sind die einzelnen textilen Lagen durch Anschmelzen miteinander verbunden. Zwischen den federnden Elementen sind in so geschaffenen Zwischenräume Garne oder Gespinste eingebunden.

Zwar zeigt das DE-GM 78 27 000 kein Bauteil in dem hier angesprochenen Sinne, jedoch läßt sich im Hinblick auf dieses Gebrauchsmuster die technische Problemstellung angeben, ein Bauteil auf Gewebebasis vorzuschlagen, das bei hoher Festigkeit ein geringes Gewicht aufweist.

Diese technische Problemstellung ist durch die Gegenstände der Ansprüche 1 und 12 gelöst. Die Unteransprüche stellen vorteilhafte Weiterbildungen dar.

Zufolge solcher Ausgestaltung ist ein hochfestes, plattiges Bauteil geringen Gewichts realisiert. Für Produkte solcher Art liegt naturgemäß ein weites Anwendungsfeld vor. Die erreichte hohe Festigkeit des praktisch als organisches Blech zu bezeichnenden Bauteils beruht wesentlich auf dem Einsatz technischer Garne wie Aramidfaser, Kohlefaser, Keramikfaser oder insbesondere Glasfaser. Insbesonders eine Mischung solcher Hochleistungsgarne ist denkbar und auf den jeweiligen Einsatzzweck anpaßbar. Bezüglich des Füllfadensystems erweist sich Polypropylen oder auch Polyamid als sehr geeignet. Hier läßt sich vor allem der Faktor des geringen Gewichts nutzen. Das spezifische Gewicht liegt bei 0,91 g pro cm ³. Hinzu kommt die hohe Geschmeidigkeit. Die zu einer Fadenschar oder einem Fadenstrang zusammengefügten Filamente sperren den überwiegenden Anteil des Füllfadenquerschnitts in Bezug auf die aushärtende Verharzung aus. Es ergibt sich nur eine mantelseitige Benetzung. Es bleiben also durchgehende, harzfreie Bereiche, gebildet eben durch die (zusammengepreßten) Füllfäden. Letztere sind als Schußfäden eingebracht. Bezüglich der Gewebestruktur liegt insgesamt eine gute Durchharzung vor. Weiter ist es bei einem Bauteil auf Basis eines Mehrlagengewebes, und zwischen den Lagen sich erstreckenden Füllfäden, von Vorteil, daß das Mehrlagengewebe aus einem technischen Garn, insbesondere Glasfaser besteht und daß die als Schußfäden eingebrachten Füllfäden eine Fadenschar aus Kohlefasern sind. Das bringt eine optimale Gesamtstabilität, zumal erhebliche Materialanhäufungen dieser Faser möglich sind. Ihre mehr strähnige Struktur bietet auch für die Formgebung Vorteile, daß das Filamentenpaket durch Relativverschiebung der Filamente zueinander eine gute Vorformung zuläßt, die durch die Reibungskräfte der relativ zueinander verschobenen Filamente der sonst üblichen Rückstellung entgegenwirkt. Gerade diese Eigenschaft ist für den Behälter oder auch beispielsweise Rumpfaufbau von Wasser- oder Luftfahrzeugen günstig. Vorteilhaft im Zusammenhang mit einer möglichst guten Durchharzung bei trotzdem großem "porösen" Anteil ist weiter, daß die Filamente der Fadenschar auf Polypropylen- oder Polyamid-Basis unregelmäßig gekräuselt sind. Hierdurch ergibt sich bei sogar weiter verringerter Anzahl an Filamenten eine noch hohlraumreichere Scharstruktur. Die Fixierung des Füllsystems an den das Mehrlagengewebe bildenden Lagen geschieht durch in Kettrichtung verlaufende Einbindefäden. Diesbezüglich ist weiter so vorgegangen, daß die obere und untere Lage aus Flachfäden gewebt sind. Das führt zu einer dünnflächigen, den Belastungsrichtungen die Breitseite zuwendenden bänderartigen Gebilden in Art der Leinenbindung. In diesem Zusammenhang wird weiter vorgeschlagen, daß die Breite der Flachfäden etwa der Hälfte der Breite der Füllfäden entspricht. Ein vorteilhaftes Verfahren der Herstellung eines Bauteils gemäß den Ansprüchen 1 bis 11 besteht darin, daß zur Erzielung unterschiedlicher Dicken des Bauteils Unterlegelemente in die Form einbringbar sind. Bezüglich solcher Unterlegelemente kann es sich um Leisten zur Schaffung von Nuten etc. handeln. Auch mehr flächige Stücke sind denkbar, beispielsweise im Sinne der Erzielung einer gegenüber der allgemeinen Fläche zurückspringenden Zone zum geschützen Einkleben eines Materialhinweisschildchens, eines solchen mit Herkunftsangaben etc. In vorteilhafter Weise sind die Unterlegelemente als metallische Elemente ausgebildet. Solche als Blech-Stanzlinge realisierbaren Elemente haben den Nutzen der Ortsveränderlichkeit. Sie bieten eine hohe Variabilität auch in der Dicke. Immerhin bietet das polsterartige Füllfadensystem ein hinreichendes Ausweichen in die Tiefe bei trotzdem ebenflächiger Rückseite. Als überraschender Effekt wurde dabei gefunden, daß bei sonst gewebetypischer, rauher Oberflächenstruktur im Bereich des Einsatzes der Unterlegelemente eine völlig glatte Oberfläche entsteht (etwa einer Radierung vergleichbar). Das kann bei entsprechend klarsichtigem Grundmaterial sogar zu einer gewissen, u.U. auch glasklaren Durchsichtigkeit führen. Das wiederum erlaubt die Nutzung des Bauteils auf dem Gebiet der Lichtschrankensteuerung. Eine besonders günstige Materialkombination besteht weiter darin, daß die Kettfäden des Mehrlagengewebes aus Glasfasern und die Schußfäden aus Kohlefasern bestehen. Als ein diesbezügliches günstiges Verhältnis liegt vor, wenn die Füllfäden als ein Mehrfaches zwischen dem 5- bis 25-fachen der Kettfäden vorgesehen sind. Weiter erweist es sich als vorteilhaft, daß die Aufnahmekammer der Füllfäden durch die Schußfäden aufweisende Bindestruktur und die dort schußfadenfreie Lagenstruktur gebildet sind. Hierdurch besteht ein besonders freier Zugang für das Einbringen des Harzes. Das Mehrlagengewebe kann demzufolge eine erhebliche Dicke aufweisen, also praktisch bis zu 8 oder 10 Lagen aufweisen. Weiter wird vorgeschlagen, daß die Bindeketten des Mehrlagengewebes mäanderförmig verlaufen und die Lagenketten die Bindeketten unter Ausbildung der Aufnahmekammern für die Füllfäden kreuzen. Hierdurch entsteht ein äußerst stabiles Etagengebilde, welches trotzdem die notwendige Elastizität aufweist im Hinblick auf das Formen des Bauteils. Schließlich besteht noch ein vorteilhaftes Merkmal darin, daß die Bindeketten zwischen den Schußfäden der Gewebelagen mindestens einen Binde-Zwischenschuß aufweisen. Das führt zu einem unterbrechungsfreien Kammerwandung in Form eines Webkranzes. Endlich erweist es sich noch als günstig, daß die Lagen-Kettfäden der Gewebelagen zwischen den Kreuzungspunkten mit den Bindeketten mindestens einen Lage-Zwischenschuß aufweisen. Eine Maßnahme dieser Art kommt zur Anwendung, wenn größere bzw., in Kettrichtung gesehen, längere Aufnahmekammern erzeugt werden sollen.

Der Gegenstand der Erfindung ist nachstehend anhand zeichnerisch veranschaulichter Ausführungsbeispiele näher erläutert. Es zeigt:
- Fig. 1: die Draufsicht auf das flächige Bauteil, partiell aufgebrochen zur Sichtbarmachung des Füllsystems, und zwar in vergrößerter Wiedergabe,
- Fig. 2: den Schnitt gemäß Linie II-II in Fig. 1, ebenfalls vergrößert, die Doppellagernstruktur zeigend,
- Fig. 3: die Unteransicht gegen einen Abschnitt des Bauteiles unter Verdeutlichung einer durch ein Unterlegelement erzeugten nutartigen Eindrückung,
- Fig. 4: den Schnitt gemäß Linie IV-IV in Fig. 3, und zwar in schematisierter Darstellung sowie noch weiter vergrößert,
- Fig. 5: das weitestgehend schematisierte Webbild eines Vierlagen-Abstandsgewebes mit Füllschuß aus einer Fadenschar aus Kohlefasern,
- Fig. 6: das Webbild einer Varianten eines Sechslagen-Abstandsgewebes mit schachbrettartig angeordneter Füllschußstruktur,
- Fig. 7: ein gleiches Gewebe mit Vollausrüstung der Aufnahmekammern und
- Fig. 8: ein Achtlagen-Abstandsgewebe mit größeren Aufnahmekammern.

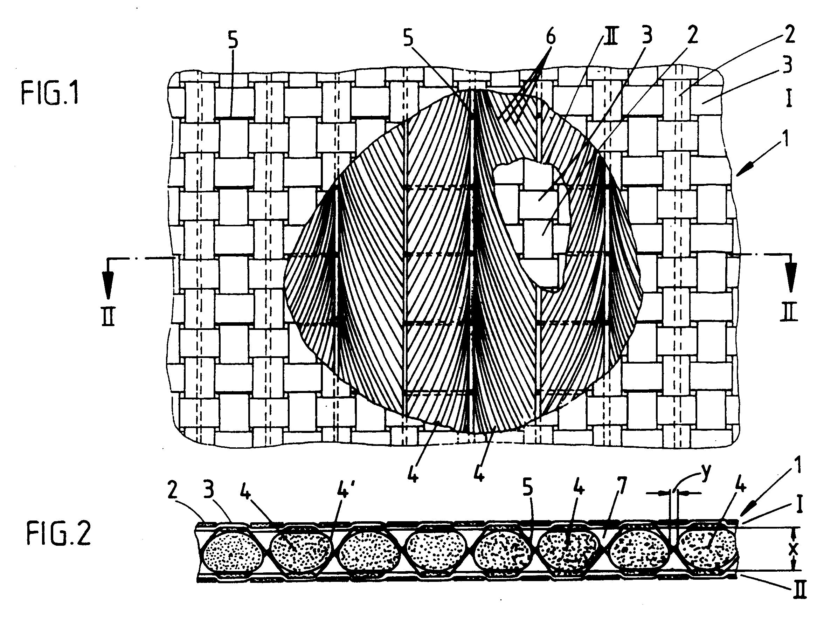

Das auf der Basis eines Mehrlagengewebes realisierte Bauteil 1 umfaßt gemäß Fig. 1 eine erste Gewebelage I und eine zweite Gewebelage II.

Beide bestehen aus einem technischen Garn wie Aramidfaser, Kohlefaser, Keramikfaser oder insbesondere Glasfaser. Es kann sich auch um eine Mischung handeln.

Die einander kreuzenden Schuß- und Kettfäden 2,3 des Mehrlagengewebes können leicht gezwirnt sein. In der Zeichnung sind sie in flacher Querschnittsform wiedergegeben.

Im Lagenzwischenraum x der parallel zueinander angeordneten Gewebelagen I,II erstreckt sich ein sogenanntes Füllsystem. Die einzelnen Füllfäden tragen das Bezugszeichen 4. Sie sind im Mehrlagengewebe in Schußrichtung verlaufend angeordnet und lassen zwischen sich einen Fugenspalt y frei. Eine Aneinanderlage ist jedoch auch denkbar.

Der die Gewebelagen I,II abstützende bzw. auf Abstand haltende Füllfaden 4 besteht gemäß Variante Fig. 1,2 aus einer Fadenschar auf Polypropylen- oder Polyamidbasis. Die Anzahl der Filamente 6 richtet sich insbesondere nach der beabsichtigten Beabstandungsweite der Lagen I,II. Die diesbezügliche Gesamt-Fadenscharquerschnittsdicke dominiert also (vergl. Fig. 2). Die Einbindung des Füllsystems erfolgt im Webprozess über in Kettrichtung verlaufende Einbindefäden 5. Letztere umschlingen wechselseitig Schußfäden 2 der ersten Gewebelage I und Schußfäden 2 der zweiten Gewebelage II und erfassen so, unter Passieren der Fugenspalte y, wechselseitig die einander benachbarten Füllfäden 4. Der Materialquerschnitt der Einbindefäden 5 tritt deutlich hinter den der Schuß- und Kettfäden 2,3 der Gewebelagen I,II zurück.

Die Füllfäden 4 können leicht gezwirnt sein, wie dies aus Fig. 1 hervorgeht. Um eine günstige Querbeabstandung der Filamente 6 zu einander zu erhalten, was zu einer besonders buschigen Scharstruktur führt, sind die Filamente 6 der Füllfäden 4 unregelmäßig gekräuselt. Unter Erzielung eines gleichgroßen Fadendurchmessers reduziert sich so die Anzahl der Filamente 6 gegeüber glatten Filamenten. Außerdem ergibt sich eine noch höhere Geschmeidigkeit für die praktisch die Armierung des Bauteiles bildende Gesamt-Gewebestruktur. Ein solcher Bauteil-Abschnitt läßt sich daher beispielsweise auf einen Zylinderkern rollen und dann verharzen und aushärten. Das Harz plus eine beizuschlagende Härterkomponente dringt in die nicht vom Füllfaden 4 eingenommenen Bereiche des Mehrlagengewebes ein. Diese Freiräume tragen das Bezugszeichen 7. Außerdem ergibt sich dabei eine Einbettung der Gewebelagen I,II. Dagegen dringt das Harz nur in den Oberflächenbereich 4′ der Füllfäden 4 ein. Es verbleibt so ein parallel orientiertes, verharzungsfreies Füllfädensystem, welches aufgrund des höheren spezifischen Gewichts des Harzes trotzdem zu einem insgesamt gewichtsmäßig leichten Bauteil führt. In die aushärtende Einbettung sind auch die Fugenspalte oder auch Zwickel zwischen den die Füllfäden 4 übergreifenden, kreuzend verlaufenden Einbindefäden 5 einbezogen. Es ergibt sich ein insgesamt hochstabiler Baukörper.

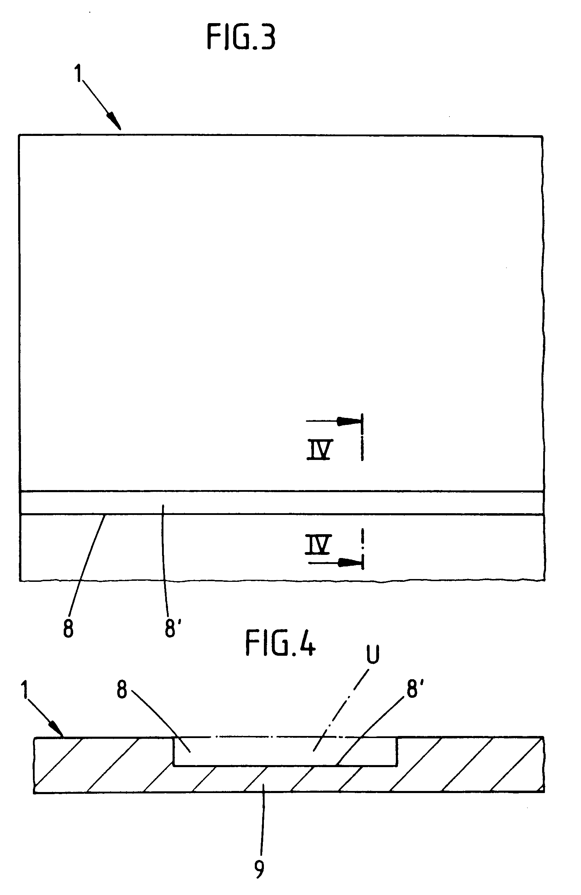

Zum aushärtenden Verharzen wird das Mehrlagengewebe in eine Form eingegeben und auf das gewünschte Dickenmaß gepresst. Da der überwiegende dickenbestimmende Anteil vom Füllsystem eingenommen wird, steht diesbezüglich eine recht große Variationstiefe zur Verfügung. Die Dicke kann auch partiell variieren, indem man zur Erzielung unterschiedlicher Dicken des Bauteiles Unterlegelemente U in die Form einbringt, die als vertiefende Abdrücke am Bauteil auftreten. Bezüglich solcher Unterlegelemente U (in Fig. 4 strichpunktiert dargestellt) kann es sich um metallische Elemente handeln, wie beispielsweise Metallplatten.

In der in den Figuren 3 und 4 veranschaulichten praktischen Anwendung weist das Bauteil eine durch Einlage eines leistenförmigen Unterlegelementes U geschaffene Vertiefung 8 in Form einer Nut auf. In der darunterliegenden Kompressionszone 9 stellt sich eine so hohe Dichte ein, daß die gewebetypische Struktur der Außenseite praktisch verschwindet und die Vertiefung 8 einen völlig ebenen, glatten Vertiefungsgrund 8′ zeigt, der sogar eine durchsichtige Zone schafft.

Wie den Fig. 1 und 2 entnehmbar, bestehen die Schußfäden 2 und Kettfäden 3 der ersten Gewebelage I und zweiten Gewebelage II aus Flachfäden, gebildet aus einer schwach gezwirnten Fadenschar. Die Breite der Flachfäden entspricht etwa der Hälfte der Breite der Füllfäden 4 bzw. dem Anderthalbfachen des Lagenzwischenraums x.

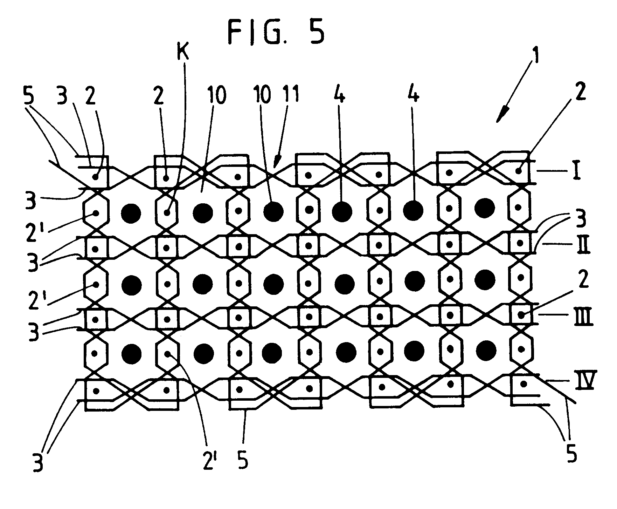

Bei den Varianten gemäß Fig. 5 bis 8 ist so vorgegangen, daß das Mehrlagengewebe ebenfalls aus technischen Garnen besteht. Die Bezugsziffern sind sinngemäß angewandt, so daß das in Fig. 5 dargestellt Vierlagen-Abstandsgewebe eine Lagenbezeichnung von I bis IV ausweist und die lagenbildenden Kettfäden mit 3 bezeichnet sind und die sie quer kreuzenden Schußfäden mit 2. Die als Schußfäden eingetragenen Füllfäden 4 bestehen aus einer Fadenschar aus Kohlefasern. Dieses glatte, strähnige Material ist leicht gezwirnt.

Die Schußfäden 2 des Mehrlagengewebes bestehen ebenfalls aus Kohlefasern, so daß sich der Anteil an Kohlefasern auf diesem Wege erhöhen läßt. Das Mengenverhältnis von Füllfaden 4 zu Schußfaden 2 ist 40K zu 3K. Auf die Füllfäden entfällt so ein Mehrfaches der Schußfäden 2. Als günstig hat sich ein Wert zwischen dem 5- und 25-fachen herausgestellt.

Die die Füllfäden 4 ausfüllend enthaltenden Aufnahmekammern 10 des waben- oder etagenartig aufgebauten Mehrlagengewebe sind aus den Fig. 5 bis 8 aufgrund der weitestgehenden Schematisierung des Webbildes besonders deutlich erkennbar. Bei der Variante gemäß Fig. 5 sind die Aufnahmekammern 10 durch die die Schußfäden 2 aufnehmende Bindestruktur und anteilig durch eine hier schußfadenfreien Abschnitt der Lagenstruktur der Gewebelagen I bis IV gebildet. Letzteres führt zu bevorzugten freien Einbringwegen 11 für die Verharzung. Die die Einbindefäden bildende Bindeketten tragen auch hier das Bezugszeichen 5. Während beim Doppellagengewebe gemäß Fig. 2 ein kreuzender Wechsel wie dargestellt, genügt, wird beim mehretagenförmigen Aufbau der Varianten gemäß 5 bis 8 bezüglich der Bindeketten ein mäanderförmiger Weg durchlaufen, der in Nachbarschaft gegenläufig sein kann oder parallel. Die reine Mäanderform ergibt sich aus Fig. 5; die gegenläufige aus den restlichen Webbildern.

Wie ersichtlich, kreuzen die Lagenketten der Gewebelagen I,II,III etc. die Bindeketten unter Ausbildung der erwähnten Aufnahekammern 10 für die Füllfäden 4.

Wie weiter ersichtlich, ist in die Bindeketten zwischen den Schußfäden 2 der Gewebelagen I,II,III etc. mindestens ein Binde-Zwischenschuß 2′ eingetragen.

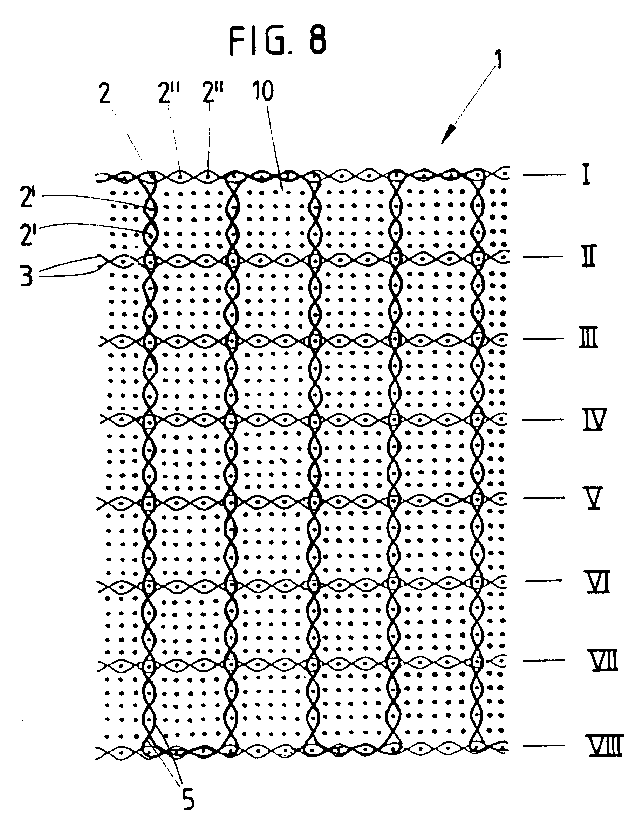

Die Variante gemäß Fig. 8 zeigt deren zwei.

Bei einer Gewebestruktur, welche auf größere Aufnahmekammern 10 abzielt, wird zweckmäßig so vorgegangen, daß die Lagen-Kettfäden 3 der Gewebelagen I, II, III usw. zwischen den Kreuzungspunkten K mit den Bindeketten (Bindefäden 5) mindestens einen Lagen-Zwischenschuß 2'' aufweisen. Bei der Variante gemäß Fig. 8 sind es deren zwei.

Selbstverständlich kann unter Variation der Zwischenschüsse 2' bzw. 2'' eine horizontal orientiere Längung der Aufnahmekammer erreicht werden bzw. eine in der Vertikalen liegende Verlängerung.

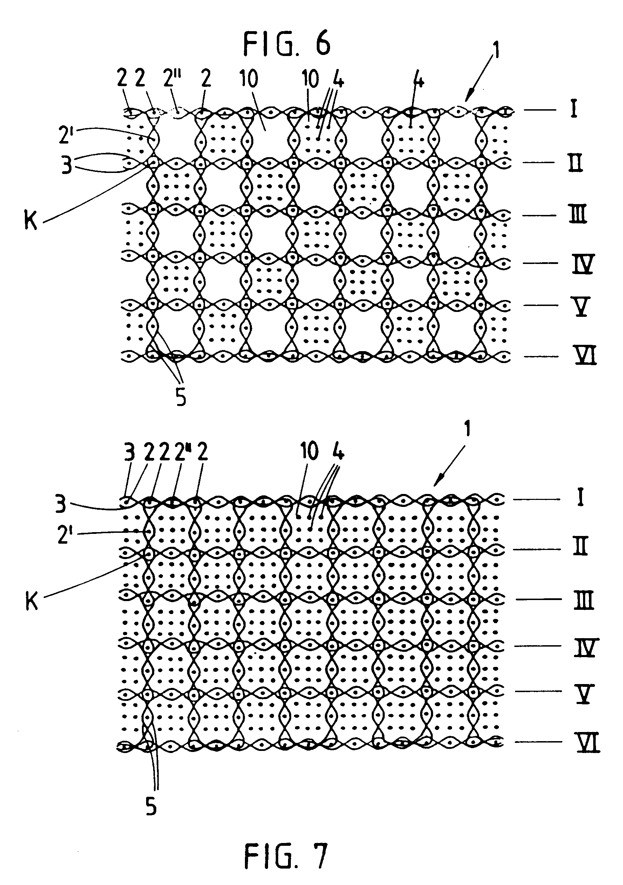

Auch ist es so, daß in bestimmten Fällen nur eine Teilausfüllung der Aufnahmekammern 10 vorgenommen wird. Hierdurch erreicht man eine besonders hochgradige Verformbarkeit in die Tiefe, d.h. in Dickenrichtung der Gewebestruktur. Die Variante gemäß Fig. 6 sieht eine über Kreuz wechselnde Füllung vor, so daß insgesamt ein schachbrettartiges Füllmuster vorliegt.

Statt eines Kohlefaserfadens als Füllfaden 4, können mehrere diesbezügliche Schüsse gleichzeitig eingetragen werden, graphisch dargestellt durch eine Vielzahl geordneter Tupfer.

Was das Verharzen der Mehrgewebelagen gemäß den Fig. 5 bis 8 betrifft, so wird hier in gleicher Weise, wie oben beschrieben, vorgegangen, und zwar auch, was die partielle Dickenvariation betrifft, unter Verwendung der beschriebenen Unterlegelemente U.

## Patentansprüche

1. Bauteil (1) auf der Basis eines Mehrlagengewebes, mit mindestens einer ersten (I) und einer zweiten Lage (II), wobei die Gewebelagen durch Einbindefäden (5) verbunden sind, weiter mit zwischen den Lagen (I, II) sich erstreckenden eingelegten Füllfäden (4), dadurch gekennzeichnet, daß das Mehrlagengewebe aus einem technischen Garn wie Aramidfaser, Kohlefaser, Keramikfaser oder insbesondere Glasfaser besteht und daß der als Schußfaden eingebrachte Füllfaden (4) eine Fadenschar auf Polypropylen- oder Polyamid-Basis ist, oder eine Fadenschar aus Kohlefasern ist, und daß das Mehrlagengewebe in an sich bekannter Weise ausgehärtet verharzt ist.

2. Bauteil nach Anspruch 1, dadurch gekennzeichnet, daß die Filamente (6) des Füllfadens (4) unregelmäßig gekräuselt sind.

3. Bauteil nach einem der vorhergehenden Ansprüche , dadurch gekennzeichnet, daß die Füllfäden (4) durch in Kettrichtung verlaufende Einbindefäden (5) gehalten sind.

4. Bauteil nach einem oder mehreren der vorhergehenden Ansprüche, dadurch gekennzeichnet, daß die obere und untere Gewebelage (I, II) aus Flachfäden gewebt ist.

5. Bauteil nach einem oder mehreren der vorhergehenden Ansprüche, dadurch gekennzeichnet, daß die Breite der Flachfäden etwa der Hälfte der Breite der Füllfäden (4) entspricht.

6. Bauteil nach einem oder mehreren der vorhergehenden Ansprüche, dadurch gekennzeichnet, daß die Kettfäden (3) des Mehrlagengewebes aus Glasfasern und die Schußfäden (2) aus Kohlefasern bestehen.

7. Bauteil nach einem oder mehreren der vorhergehenden Ansprüche, dadurch gekennzeichnet, daß die Füllfäden (4) als ein Mehrfaches zwischen dem 5- bis 25-fachen der Kettfäden (3) vorgesehen sind.

8. Bauteil nach einem oder mehreren der vorhergehenden Ansprüche, dadurch gekennzeichnet, daß die Aufnahmekammern (10) des Mehrlagengewebes für die Füllfäden (4) durch die Schußfäden (2) aufweisende Bindestruktur und die dort schußfadenfreie Lagenstruktur gebildet sind.

9. Bauteil nach einem oder mehreren der vorhergehenden Ansprüche, dadurch gekennzeichnet, daß die Einbindefäden (5) des Mehrlagengewebes mäanderförmig verlaufen und die Kettfäden (3) der Gewebelagen die Einbindefäden (5) unter Ausbildung von Aufnahmekammern (10) für die Füllfäden (4) kreuzen.

10. Bauteil nach einem oder mehreren der vorhergehenden Ansprüche, dadurch gekennzeichnet, daß die Einbindefäden (5) zwischen den Schußfäden (2) der Gewebelagen (I, II, III usw.) mindestens einen Binde-Zwischenschuß (2') aufweisen.

11. Bauteil nach einem oder mehreren der vorhergehenden Ansprüche, dadurch gekennzeichnet, daß die Lagen-Kettfäden (3) der Gewebelagen (I, II, III usw.) zwischen den Kreuzungspunkten (K) mit den Einbindefäden (5) mindestens einen Lagen-Zwischenschuß (2'') aufweisen.

12. Verfahren zur Herstellung eines Bauteils gemäß den Ansprüchen 1 bis 11, wobei ein geharztes Mehrlagengewebe zum Pressen und Aushärten in eine Form eingegeben wird, dadurch gekennzeichnet, daß zur Erzielung unterschiedlicher Dicken des Formteils (1) Unterlegelemente (U) in die Form einbringbar sind.

13. Verfahren nach Anspruch 12, dadurch gekennzeichnet, daß die Unterlegelemente (U) als metallische Elemente ausgebildet sind.

## Claims

1. Structural member (1) based on a multi-ply fabric, with at least one first (I) and one second ply (II), wherein the fabric plies are joined by tie-in threads (5), further with inlaid filling threads (4) extending between the plies (I, II), characterised in that the multi-ply fabric consists of an industrial yarn such as aramide fibre, carbon fibre, ceramic fibre or in particular glass fibre and in that the filling thread (4) inserted as the weft thread is a thread assembly based on polypropylene or polyamide, or is a thread assembly of carbon fibres, and in that the multi-ply fabric is resinified and hardened in a manner known in the art.

2. Structural member according to claim 1, characterised in that the filaments (6) of the filling thread (4) are irregularly crimped.

3. Structural member according to any of the preceding claims, characterised in that the filling threads (4) are held by tie-in threads (5) running in the warp direction.

4. Structural member according to one or more of the preceding claims, characterised in that the upper and lower fabric plies (I, II) are woven from flat threads.

5. Structural member according to one or more of the preceding claims, characterised in that the width of the flat threads roughly corresponds to half the width of the filling threads (4).

6. Structural member according to one or more of the preceding claims, characterised in that the warp threads (3) of the multi-ply fabric consist of glass fibres and the weft threads (2) consist of carbon fibres.

7. Structural member according to one or more of the preceding claims, characterised in that the filling threads (4) are provided as a multiple between 2 and 25 times the warp threads (3).

8. Structural member according to one or more of the preceding claims, characterised in that the holding chambers (10) of the multi-ply fabric for the filling threads (4) are formed by a tying structure comprising the weft threads (2) and the ply structure which is free from weft threads there.

9. Structural member according to one or more of the preceding claims, characterised in that the tie-in threads (5) of the multi-ply fabric run in meander fashion and the warp threads (3) of the fabric plies cross the tie-in threads (5), forming holding chambers (10) for the filling threads (4).

10. Structural member according to one or more of the preceding claims, characterised in that the tie-in threads (5) between the weft threads (2) of the fabric plies (I, II, III, etc.) comprise at least one tying intermediate weft (2').

11. Structural member according to one or more of the preceding claims, characterised in that the ply warp threads (3) of the fabric plies (I, II, III, etc.) between the points of intersection (K) with the tie-in threads (5) comprise at least one ply intermediate weft (2'').

12. Method for the manufacture of a structural member according to claims 1 to 11, wherein a resinified multi-ply fabric is introduced into a mould for pressing and hardening, characterised in that underlay elements (U) can be introduced into the mould to obtain different thicknesses of the moulded article (1).

13. Method according to claim 12, characterised in that the underlay elements (U) are constructed as metal elements.

## Revendications

1. Elément de construction (1) à base de tissu multicouche comportant au moins une première couche (I) et une deuxième couches (II), dans lequel les couches de tissu sont reliées par des fils de liaison (5) et dans lequel s'étendent, en outre, et sont insérés entre les couches (I, II), des fils de remplissage (4), caractérisé en ce que le tissu multicouche est constitué d'un filé technique à base de fibres d'aramide, de carbone, de céramique ou notamment de fibres de verre et en ce que le fil de remplissage (4) inséré comme un fil de trame soit une mèche à base de polypropylène ou de polyamide, ou soit une mèche de fibre de carbone, et en ce que le tissu multicouche est, d'une façon connue en soi, imprégné de résine et durci.

2. Elément de construction selon la revendication 1, caractérisé en ce que les filaments (6) du fil de remplissage (4) sont frisés irrégulièrement.

3. Elément de construction selon l'une quelconque des revendications précédentes, caractérisé en ce que les fils de remplissage (4) sont maintenus par des fils de liaison (5) disposés selon le sens de la chaîne.

4. Elément de construction selon une ou plusieurs des revendications précédentes, caractérisé en ce que la couche supérieure et la couche inférieure du tissu (I, II) sont obtenus par tissée de fil plat.

5. Elément de construction selon l'une ou plusieurs des revendications précédentes, caractérisé en ce que la largeur du fil plat correspond à peu près à la moitié de la largeur du fil de remplissage (4).

6. Elément de construction selon l'une ou plusieurs des revendications précédentes, caractérisé en ce que les fils de chaîne (3) du tissu multicouche sont en fibres de verre et les fils de trame (2) sont en fibres de carbone.

7. Elément de construction selon l'une ou plusieurs des revendications précédentes, caractérisé en ce que les fils de remplissage (4) représentent un multiple compris entre 5 et 25 fois les fils de chaîne (3).

8. Elément de construction selon l'une ou plusieurs des revendications précédentes, caractérisé en ce que les chambres (10) du tissu multicouche destinées à recevoir les fils de remplissage (4) sont formées par la structure de liaison comportant les fils de trame (2) et la structure exempte de fils de trame qui s'y trouve.

9. Elément de construction selon l'une ou plusieurs des revendications précédentes, caractérisé en ce que les fils de liaison (5) du tissu multicouche suivent un trajet sinueux et en ce que les fils de chaîne (3) des couches du tissu croisent les fils de liaison (5) avec formation des chambres (10) destinées à la réception des fils de remplissage (4).

10. Elément de construction selon l'une ou plusieurs des revendications précédentes, caractérisé en ce que les fils de liaison (5) situés entre les fils de trame (2) des couches de tissu (I, II, III, etc) comportent au moins une trame de liaison intercalaire (2').

11. Elément de construction selon l'une ou plusieurs des revendications précédentes, caractérisé en ce que les fils de chaîne (3) des couches de tissu (I, II, III, etc) situés entre les points de croisement (K) avec les fils de liaison (5) comportent au moins une trame intercalaire (2'').

12. Procédé de fabrication d'un élément de construction selon l'une des revendications 1 à 11, dans lequel un tissu multicouche enduit de résine est introduit dans un moule pour y être pressé et durci, caractérisé en ce que, pour obtenir des épaisseurs différentes de la pièce moulée (1), sont susceptibles d'être introduits dans le moule des éléments intercalaires (U).

13. Procédé selon la revendication 12, caractérisé en ce que les éléments intercalaires (U) sont des éléments métalliques.
